# EUROPEAN PATENT SPECIFICATION

(11) **EP 4 028 211 B1**
(45) Date of publication and mention of the grant of the patent: **01.11.2023**
(21) Application number: 20786587.4
(22) Date of filing: 08.09.2020
(51) Int. Cl.: B23Q 3/155, B23D 35/00, B25J 5/02

(54) **AUTOMATED SYSTEM FOR COMPOSING OR DISASSEMBLING A CUTTING FORMATION**
AUTOMATISIERTES SYSTEM ZUM ZUSAMMENSETZEN ODER ZERLEGEN EINER SCHNITTFORMATION
SYSTÈME AUTOMATISÉ DE COMPOSITION OU DE DÉMONTAGE DE FORMATION DE COUPE

(30) Priority: 09.09.2019 IT 201900015875
(43) Date of publication of application: 20.07.2022
(73) Proprietor: Faspar S.p.A., 20087 Robecco sul Naviglio (MI) (IT)
(72) Inventor: AIME, Paolo Ottavio, 20087 Robecco sul Naviglio (MI) (IT); AIME, Maddalena Lucia, 20087 Robecco sul Naviglio (MI) (IT)
(74) Representative: IP Sextant s.r.l.
(86) International application number: PCT/IB2020/058324
(87) International publication number: WO 2021/048730

(56) References cited:
- EP-A1- 1 552 899
- EP-A1- 2 808 122
- IT-B- 1 187 368
- KR-A- 20100 020 697
- KR-B1- 101 185 066
- KR-B1- 101 263 440
- US-A1- 2004 007 140

## Description

The present invention relates to an automated system according to the preamble of claim 1 for assembling or disassembling cutting formations used for sheet metal cutting. EP 2 808 122 A1 discloses an example of such an automated system.

The present invention also relates to a method for assembling or disassembling cutting formations along at least one arm of an interim device, used in the slitter-type sheet metal cutting lines.

It is noted that, in the following description and in the claims, with the expression "cutting formation" means a group of cutting tools, selected from one or more circular blades and one or more annular spacer elements, arranged together in a predetermined sequence and that can be used in this sequence for processing wound sheets of metallic material in coils. Furthermore, with the terms "assemble" and "disassemble", referring to a formation of cut, means, respectively, the sequential operation of inserting or removing in sequence, the group of cutting tools of the cutting formation into or from a support arm.

In the field it is known the use of an automated system to assemble or disassemble cutting formations to be used in a sheet metal cutting machine.

Generally, such a system comprises at least one automatic warehouse bearing at least an equipped wall, from which a plurality of arms for the cantilevered support of circular cutting tools or annular spacer elements, at least one manipulator robot, adapted to picking up/storing said cutting tools or annular spacer elements and at least one system interim along which assemble or disassemble a cutting formation.

The manipulator robot is moved along the warehouse until it arrives at the cutting tool or annular spacer element required, for picking it up and then for moving it towards the interim system so that it can then be worn along at least one support arm of the same.

The manipulator robot sequentially repeats these operations until completing the cutting formation along the interim system.

If, on the other hand, it is intended to disassemble a cutting formation and store the individual cutting tools or annular spacer elements along the equipped wall, waiting for a subsequent use of them, it is to proceed in the reverse order with respect to what is disclosed above.

The interim system is generally installed in an interposed position between the warehouse and a parking station including a carousel system, with which it can interact to deposit one or more cutting formations, waiting for their use on the machine, or it can pick up cutting formations coming from the cutting machine, for example at the end of a process.

The system described above allows the automatically execution of the loading/unloading phases for the individual tools in relation to the interim system for high level of safety in use.

This system has an operating capacity limited by the time taken by the manipulator robot to pick up the individual cutting tools and any spacer elements and to move them towards the interim system. In fact, in the case in which the circular cutting tools or the annular spacer elements to be moved are provided along the vertical wall in a distal position from the workstation of the interim system, the manipulator robot must travel the entire vertical wall or substantially the entire vertical wall each time before the tool can be unloaded/picked up relative to the support arm of the interim system.

Document KR 20110085705 discloses an interim system and an automatic warehouse comprising two manipulator robots for positioning or removing cutting formations relative to the interim system.

This solution, although it allows to reduce the overall time necessary to assemble or break down cutting formations relative to the interim system, is highly complex and difficult to integrate into existing slitter lines, having to require the replacement of the entire tool storage and a modification to the layout of the line slitter.

Document EP 0 911 104 describes a storage for circular cutting tools and annular spacer elements that can be used in a slitter-type cutting line, wherein the storage comprises a frame along which supports for the tools and a manipulator robot, that can be moved along three axes for picking up/storing the individual tools relative to their respective supports, are provided.

This warehouse has the same operating limits reported in relation to the state of the art.

The purpose of the present invention is to optimize the functionality of an automated system to assemble or disassemble cutting formations used in a slitter type line as part of a simple and efficient solution.

Another purpose of the present invention is to allow the integration of this automated system, in a pre-existing slitter line, to supplement it or to replace an automated system for assembling or disassembling cutting formations, of a traditional type.

The specific object of the present invention is an automated system configured to assemble or disassemble cutting formations comprising a storage provided with at least one equipped wall, wherein the equipped wall is configured to support a plurality of circular tools, at least one manipulator robot, movable relative to the at least one equipped wall and configured to pick up or store one or more of the circular tools, at least one interim system configured to interact with the at least one manipulator robot to sequentially receive or provide single among the circular tools, wherein the automated system comprises a guide system for guiding the at least one manipulator robot and the at least one interim system relative to the at least one equipped wall, wherein the at least one manipulator robot and the at least one interim system are operably connectable to each other selective to allow mutual exchange of circular tools during their simultaneous movement along the guide system.

According to another aspect of the present invention, the guide system can comprise at least one rail that develops along a first direction, wherein the first direction develops parallel or substantially parallel to the at least one equipped wall.

According to a further aspect of the present invention, the at least one manipulator robot and the at least one interim system can be slidingly engaged one after the other along the at least one rail.

According to an additional aspect of the present invention, the guide system can comprise a first rail and a second rail parallel to each other and mutually spaced, wherein the first rail is interposed between the equipped wall and the second rail.

According to another aspect of the present invention, the at least one manipulator robot can be slidingly engaged along the first rail and the at least one interim system can be slidingly engaged along the second rail.

According to a further aspect of the present invention, the automated system can comprise at least one position control system configured to move the at least one manipulator robot and the at least one interim system along the guide system.

According to an additional aspect of the present invention, the at least one position control system can be configured to maintain the at least one robot manipulator and the at least one interim system by keeping them at a constant distance during their movement along the guide system.

Furthermore, a method for assembling a cutting formation by means of an automated system forms a specific object of the present invention, wherein the cutting formation includes a sequence of circular tools, the method comprising the following steps for each specific circular tool of the sequence of the formation cutting:
- place the at least one manipulator robot of the automated system at the at least one equipped wall, bringing the gripping element of the manipulator robot near the specific circular tool to be picked up;
- take the specific circular tool through the gripping element;
- move at least one interim system, included in the automated system along the guide system, until it is brought at the at least one manipulator robot;
- mutually coupling the gripping element and at least one support arm of the at least one interim system to move the specific circular tool from the gripping element to the at least one interim system, inserting it along the at least one support arm of the at least an interim system,
- decouple the interim system from at least one robot manipulator by moving them away from each other.

According to another aspect of the present invention, the step of moving the at least one interim system can comprise causing the at least one interim system to follow the at least one manipulator robot.

According to a further aspect of the present invention, the handling step may comprise causing the at least one interim system to follow the at least one manipulator robot at a predetermined distance.

According to an additional aspect of the present invention, the step of mutually coupling the gripping element and at least one support arm of the at least one interim system may comprise rotating the at least one interim system around a second axis of rotation and/or rotating the at least one manipulator robot so as to align the at least one support arm of the interim system with the gripping element of the at least one manipulator robot.

Further, specific object of the present invention, it forms a method for disassembling a cutting formation by means of an automated system, wherein the cutting formation includes a sequence of circular tools supported along at least one support arm of an interim system included in the automated system, the method comprising the following steps for each specific circular tool of the cutting formation sequence:
- move the at least one robot manipulator at a deposit point of the specific circular tool along the at least one equipped wall,
- move the at least one interim system along a guide system included in the automatic system, until it reaches the at least one manipulator robot,
- couple the at least one support arm carrying the cutting formation with a gripping element included in the manipulator robot,

- take the specific circular tool from at least one support arm through the gripping element,
- store the specific circular tool in the deposit point of the specific circular tool along the at least one equipped wall using the gripping element.

The advantages offered by the automated system to assemble or disassemble cutting formations according to the invention are evident.

In particular, the automated system according to the invention is configured to be used in a traditional slitter-type cutting line, to supplement or replace a traditional automated system, requiring minimal changes to the cutting line itself, thus within the scope of a solution easily to be integrated.

The present invention will now be described, for illustrative but not limitative purposes, according to its preferred embodiments, with particular reference to the Figures of the attached drawings, in which:
Figure 1 shows a schematic perspective view from above of an automated system to assemble or disassemble a cutting formation according to the invention, arranged at a traditional carousel system;
Figures 2 and 3 show detailed perspective views from above of some operational configurations assumed by the components of the automated system according to the invention;
Figures 4 and 5 show detailed perspective views of a component of the automated system according to the invention at a carousel system of Figure 1;
Figures 6 and 7 show perspective views from above of a further embodiment of the automated system according to the invention.

In the Figures identical reference numbers will be used for similar elements.

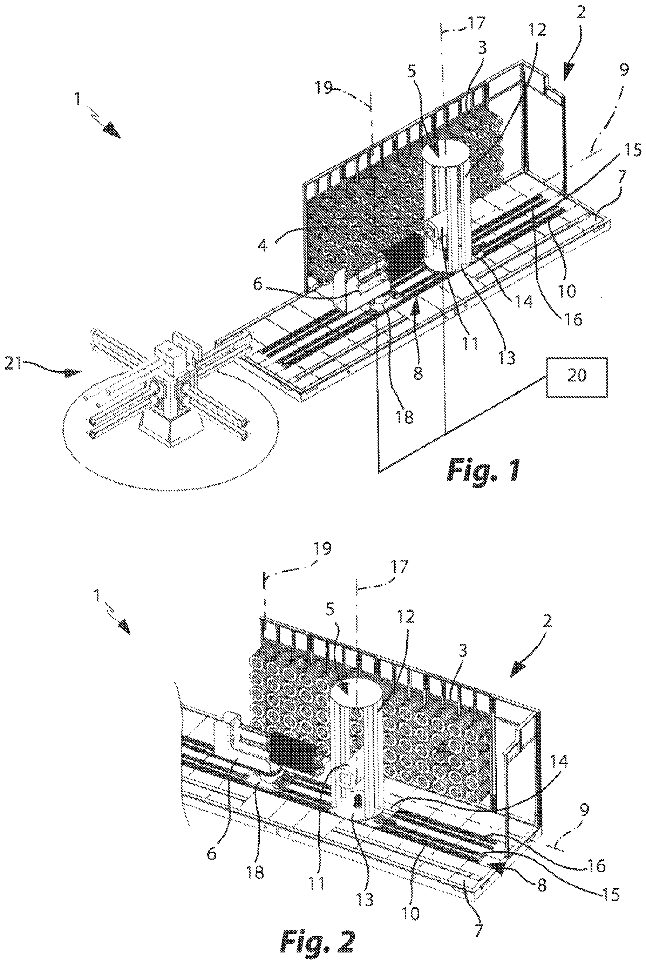

With reference to Figure 1, it can be observed that a preferred embodiment of an automated system according to the invention, configured to assemble or disassemble at least one cutting formation is wholly indicated with 1.

Below, to refer to the automated system to assemble or disassemble at least one cutting formation, the expression automated system 1 will be used, for the sake of brevity.

The automated system 1 comprises a storage 2 equipped with at least one equipped wall 3, which is configured to support a plurality of circular cutting tools and/or annular spacer elements indicated as a whole with 4, at least one manipulator robot 5, that can be moved relative to the at least one equipped wall 3 and which is configured to pick up and store the individual circular cutting tools or annular spacer elements 4 along it, at least one interim system 6 configured to interact with the at least one manipulator robot 5 along the storage 2 for the exchange sequential of circular cutting tools and/or annular spacer elements 4.

In the following and in the attached Figures, a circular cutting tool and an annular spacer element will both be referred to as circular tools 4, since, although they perform different functions, they can both be considered tools and have a circular shape.

The at least one interim system 6 is of the traditional type, that is to say it comprises a pair of support arms, each constrained at one end to a support structure and free at the opposite end to allow, as mentioned, the loading of the circular tools 4 according to a predetermined cutting formation or their unloading for example at the end of a machining.

The description of the at least one interim system 6 will therefore be limited to those features necessary for the understanding of the present invention.

The automated system 1 comprises a base portion or base 7 which delimits the storage 2 from below.

The automated system 1 also comprises a guide system 8, configured to guide the at least one manipulator robot 5 and the at least one interim system 6 along the storage 2, relative to the at least one equipped wall 3.

The guide system 8 extends linearly along the base portion 7 of the storage 2.

The guide system 8 comprises at least one rail that defines a first direction 9 or direction of movement, along which the at least one manipulator robot 5 and the at least one interim system 6 can be selectively moved.

According to a preferred embodiment illustrated in the attached Figures 1-5, the guide system 8 comprises a single rail 10 which extends linearly along the at least one equipped wall 3, parallel or substantially parallel thereto.

According to general knowledge, the term "rail" means to indicate, according to the general knowledge, a mechanical guide structure that comprises a pair of linear guides or rails parallel to each other.

The at least one equipped wall 3 orthogonally rises from the base portion 7 and comprises a plurality of cantilevered arms, not shown in the attached Figures, configured to support respective circular tools 4.

The at least one manipulator robot 5 is of a type known in the field and comprises at least one gripping element 11 (which has been schematized in the attached figures as a cylindrical element) which can be moved in space to be selectively positioned in correspondence with one of the cantilevered arms of the at least one equipped wall 3 carrying the circular tool 4 to be picked up or store.

By way of non-limiting example, the at least one manipulator robot 5 can comprise a portal or column structure 12 which extends along a direction normal to the base portion 7. The portal or column structure 12, in turn, has a base 13 which acts as a support for the portal or column structure 12 itself (see Figures 1-5).

According to a preferred embodiment illustrated in the attached figures, the portal structure 12 includes four columns interposed between the base 13 and a top portion, to delimit a structure along which the at least one gripping element 11 can be moved.

The at least one gripping element 11 is in fact operationally connected to the portal or column structure 12 along which it can be moved and rotated.

In particular, the at least one robot manipulator 5 is configured to move the at least one gripping element 11 so as to place it at the circular tools 4 to be picked up or stored along the equipped wall 3.

According to an alternative embodiment, not shown in the attached Figures, the manipulator robot 5, instead of a portal or column structure 12 comprises an arm provided with a grip to whose free end the grip element 11 is connected, which is thus movable in space to perform the same functions previously described.

The configuration of a gripping element 11 and more generally that of at least one robot manipulator 5 to pick up or store circular tools 4 is not essential for the invention and therefore will not be described in detail.

The automated system 1 comprises first moving members, for moving the at least one manipulator robot 5 along the guide system 8. The first moving members comprise a first carriage 14 associated with a bottom portion of the manipulator robot 5 and first drive components, not illustrated in detail in the attached Figures, to move the first carriage 14 along the guide system 8.

By way of non-limiting example, the first drive components can comprise at least one motorized pinion associated with the first carriage 14 and adapted to engage on a first rack 15 (shown in the attached Figures 1-5) associated along the at least one rail 10 of the guide system 8 and, optionally, a second motorized pinion associated with the first carriage 14 and able to engage on a second rack 16 also associated along the guide system 8, in a distal position from the first rack 15 and parallel to it. Alternatively, the drive components can comprise a belt transmission driven by a motorized pulley, or a system comprising hydraulic cylinders or similar systems suitable for determining a controlled drive of the first carriage 14 along the guide system 8.

The first moving members also comprise a first rotary drive, not illustrated in detail in the attached Figures, interposed between the first carriage 14 and the base 13 of the manipulator robot 5, wherein the first rotary drive comprises a rotary joint operatively connected to a rotary motor to allow the selective rotation of the manipulator robot 5 around a first axis of rotation 17.

The automated system 1 comprises second moving members for moving the at least one interim system 6 along the guide system 8. The second moving members comprise a second carriage 18 associated with a bottom portion of the at least one interim system 6 and second drive components, not illustrated in detail in the attached Figures, to move the second carriage 18 along the guide system 8.

By way of non-limiting example, the second drive components can be configured in a similar way to the first drive components and comprise at least one motorized pinion associated with the second carriage 18 and able to mesh with the first rack 15 and, optionally, a second motorized pinion associated with the second carriage 18 and adapted to mesh along the second rack 16. Alternatively, the second drive components can comprise a belt transmission driven by a motorized pulley, or a system comprising hydraulic cylinders or similar systems suitable for determining a controlled drive of the second carriage 18 along the guide system 8.

The second movement members also comprise a second rotary drive, not shown in detail in the attached Figures, interposed between the second carriage 18 and the bottom portion of the at least one interim system 6, wherein the second rotary drive comprises a rotary joint operatively connected to a rotary motor to allow the selective rotation of the at least one interim system 6 around a second axis of rotation 19.

According to the preferred embodiment illustrated in the attached Figures 1-5, the at least one manipulator robot 5 and the at least one interim system 6 can be moved along the rail 10 in succession. According to this version, the first moving members of the at least one manipulator robot 5 and the second moving members of the at least one interim system 6 share the first rack 15 and the second rack 16.

It is pointed out that further embodiments are possible, wherein the guide system 8 comprises a first track along which the at least one manipulator robot 5 is slidingly engaged and a second track along which the at least one interim system 6 is slidingly engaged.

Returning to the embodiment illustrated in the attached Figures 1-5, the at least one manipulator robot 5 and the at least one interim system 6 can be operated in motion along the rail 10 of the guide system 8 so as to selectively define a single moving mobile assembly.

In this regard, it should be noted that the automated system 1 according to the invention comprises a position control system, schematically indicated in Figure 1 with 20, to which the at least one manipulator robot 5 and the at least one interim system are operationally connected 6. The position control system 20 is configured to control and manage the positioning, orientation and movement of the at least one interim system 6 relative to the at least one manipulator robot 5 as well as the positioning of both relative to the at least one equipped wall 3.

In particular, the position control system 20 is configured to maintain, if required, the at least one manipulator robot 5 and the at least one interim system 6 with a predetermined mutual distance during their simultaneous movement along the guide system 8.

In fact, the position control system 20 is configured to move the at least one interim system 6 so as to make it follow the at least one manipulator robot 5 along the guide system 8 and, possibly, to keep it at a predetermined distance from the at least one manipulator robot 5 itself.

It should be noted that during the tracking step the at least one interim system 6 is configured in such a way as to have its support arms facing the gripping element 11 of the at least one manipulator robot 5, to allow the selective and sequential passage of the circular tools 4 between the gripping element 11 and the at least one interim system 6, or vice versa, according to the methods that will be better described hereinafter.

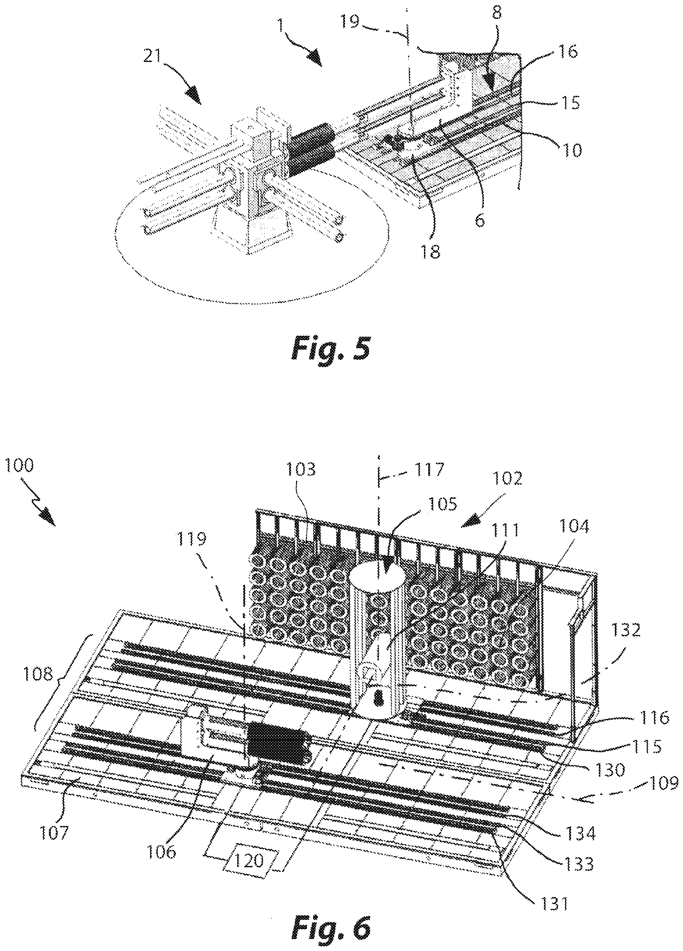

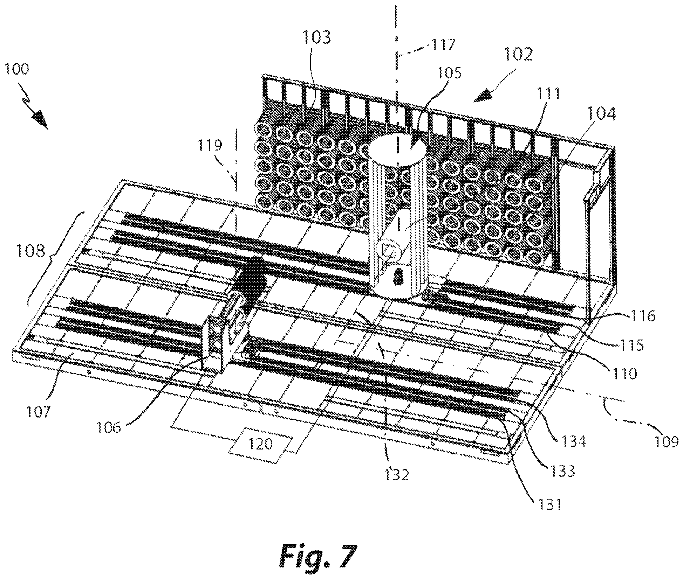

A further embodiment of the automated system according to the invention is illustrated in the attached Figures 6 and 7, and wholly indicated with 100. In the following, to indicate the components corresponding to those described for the previous embodiment, the same numbers will be used increased by one hundred units.

The automated system 100 differs from the previous embodiment in relation to the configuration of the guide system 108 along which the at least one manipulator robot 105 and the at least one interim system 106 are moved.

The guide system 108 comprises a first rail 130 and a second rail 131 which extend along the base portion 107 parallel to each other and to the first direction 109, mutually side by side in a spaced position.

In fact, the first rail 130 and the second rail 131 both develop parallel to at least one equipped wall 103.

More in detail, the first rail 130 is arranged proximal to the at least one equipped wall 103, in an interposed position between this and the second rail 131.

The at least one manipulator robot 105 is slidingly connected to the first rail 130, through the first moving members, while the at least one interim system 106 is slidingly connected along the second rail 131 through the second moving members.

In this regard, it should be noted that the first drive components of the first movement members can comprise a first rack 115 and a second rack 116 which extend along the first rail 130 for the same purposes described in relation to the previous embodiment.

Similarly, the second drive components of the second movement members can comprise a third rack 133 and a fourth rack 134 extending along the second rail 131 (see Figures 6 and 7).

The at least one interim system 106 and the gripping element 111 of the at least one robot manipulator 105 are rotatable respectively about a second axis of rotation 119 and a first axis of rotation 117 to mutually align the support arms of the at least an interim system 106 and the gripping element 111 along a third direction 132, perpendicular to the first direction 109 and to the first and second rotation axes 117 and 119 (see Figure 7).

The automated system 100 comprises a position control system 120 configured to position the at least one interim system 106 and the at least one robot manipulator 105, mutually aligning them along the third direction 132. In practice, the position control system 120 controls tracking of the at least one interim system 106 towards the gripping element 109 of the at least one manipulator robot 105.

With reference to the foregoing, it is clear that the automated system 1, 100 according to the invention is able to achieve the intended purposes.

The presence of a guide system 8, 108 along which it is possible to move both the at least one robot manipulator 5, 105 and the at least one interim system 6, 106, allows to limit the time necessary for the assembling/disassembling of a cutting formation along the support arms of the at least one interim system 6, 106 according to a solution able to optimize setup times, limiting them. In fact, the time taken by the at least one manipulator robot 5, 105 to position itself along the at least one equipped wall 3, 103 of the storage 2, 102 is used to pick up or store the individual circular tools 4, 104 along the at least one system interim 6, 106 thus avoiding setup down times that afflict traditional type solutions.

Furthermore, the automated system 1, 100 according to the invention can be installed along a slitter-type cutting line at a parking station comprising a carousel system of known type, wholly indicated with 21 (see Figure 1), according to a solution that can be easily implemented in pre-existing sheet metal cutting lines.

In this regard, it should be noted that the control system 20, 120 is configured to be operably connected to a management unit of the carousel system 21, so as to be able to coordinate the movement between the at least one interim system 6, 106 and the carousel system 21 itself.

In general, a carousel system 21 has pairs of arms aligned with each other, one above the other, which protrude radially from a vertical support column, according to a scheme known in the sector, wherein the individual arms are configured to receive or release respective cutting formations coming from the at least one interim system 6, 106 and to be subsequently loaded onto or from a cutting machine and to be loaded onto at least one interim system 6, 106 waiting to be disassembled and returned to the storage.

The object of the present invention is a method for assembling or disassembling at least one cutting formation which can be performed by means of an automated system 1, 100 described above.

The steps related to the composition of at least one cutting formation along at least one support arm of the at least one interim system 6, 106 will be described below, which will then be deposited along an arm of the carousel system 21.

It is understood that to proceed with the disassembling of at least one cutting formation from at least one support arm of the at least one interim system 6, 106, one will proceed in the reverse way with respect to what is described below.

The method of assembling a cutting formation along at least one support arm of the at least one interim system 6, 106 by means of an automated system 1, 100 comprises a step of positioning the at least one manipulator robot 5, 105 at the at least an equipped wall 3, 103 at a circular tool 4, 104 to be picked up.

The step of positioning the at least one manipulator robot 5, 105 includes moving the at least one manipulator robot 5, 105 along the guide system 8, 108 and verifying its position by the control system 20, 120.

Then, with the manipulator robot 5, 105 in position in front of the at least one equipped wall 3, 103, the gripping element 11, 111 picks up a circular tool 4, 104 according to methods known in the field.

The at least one interim system 6, 106 is moved along the guide system 8, 108, until it is brought near the at least one manipulator robot 5, 105 (see for example Figure 2).

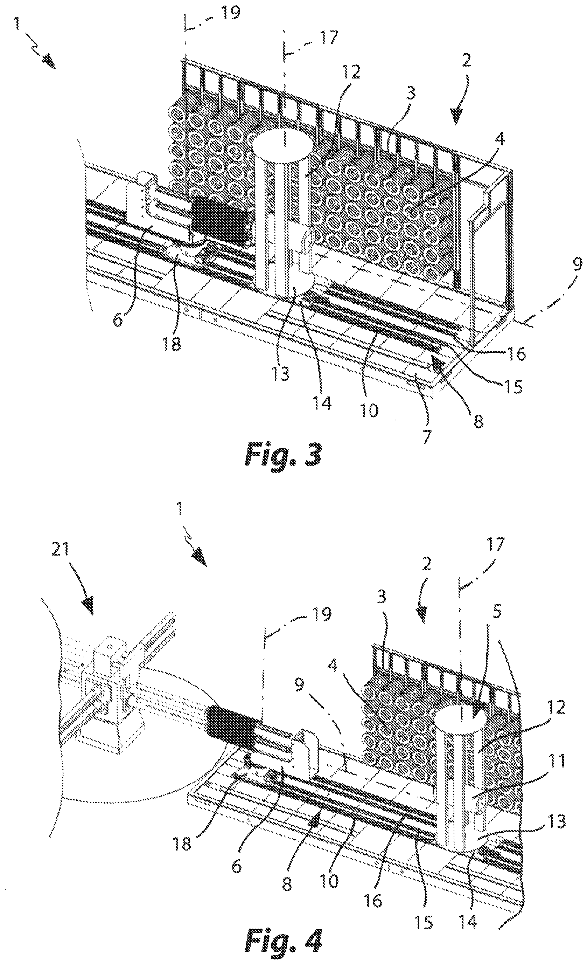

The gripping element 11, 111 and the at least one support arm of the at least one interim system 6, 106 are aligned with each other, possibly by rotating the at least one manipulator robot 5, 105 around the first axis of rotation 17, 117 and/or by rotating the at least one interim system 6, 106 about the second axis of rotation 19, 119. Then, the gripping element 11, 111 and the at least one support arm of the at least one interim system 6, 106 are mutually coupled so as to allow the circular tool 4, 104 to pass from the gripping element 11, 111 along the at least one support arm of the at least one interim system 6, 106 (see for example Figure 3).

Once the circular tool 4, 104 is loaded on the at least one interim system 6, 106, the gripping element 11, 111 is brought to the next circular tool 4, 104 to be picked up along the equipped wall 3, 103 possibly moving the at least a manipulator robot 5, 105 and/or the at least one interim system 6, 106, if the latter is an obstacle to the advancement of the at least one manipulator robot 5, 105 along the guide system 8, 108 and/or must following the at least one manipulator robot 5, 105 into a new position along the guide system 8, 108.

The step of taking a circular tool 4, 104 from the at least one equipped wall 3, 103 and then placing it along a support arm of the at least one interim system 6, 106, in succession to the circular tool previously loaded on the arm support, is repeated. During the loading phase of the circular tool 4, 104 along the at least one interim system 6, 106, if the next circular tool 4, 104 to be picked up is positioned along the at least one equipped wall 3, 103 in a distal position from the position current of the at least one interim system 6, 106, the movement of the at least one manipulator robot 5, 105 and of the at least one interim system 6, 106 is controlled along the guide system 8, 108, optionally this movement can take place simultaneously in a function of the relative position of the at least one manipulator robot 5, 105 and of the at least one interim system 6, 106 with each other and with respect to the circular tool 4, 104 to be picked up.

In this way, the time required for the various positioning of the at least one robot manipulator 5, 105 relative to the at least one equipped wall 3, 103 is exploited to continue in the composition of the cutting formation, overcoming a drawback of the automatic systems for assembling or disassembling cutting formations of the state of the art described above.

Furthermore, keeping the at least one interim system 6, 106 in the immediate vicinity of the at least one manipulating robot 5, 105 reduces the time then required to couple the gripping element 11, 111 to the at least one support arm of the at least one interim system 6, 106 and, therefore, for transferring the circular tool 4, 104.

The steps indicated above are continued until the cutting formation is completed along the at least one support arm of the at least one interim system 6, 106. Then the at least one interim system 6, 106 is decoupled from the at least one robot manipulator 5, 105.

Finally, the at least one interim system 6, 106 is moved along the guide system 8, 108 until it reaches a carousel station 21 wherein the previously assembled cutting formation is unloaded along the at least one support arm of the at least one interim system 6, 106 (see for example Figure 4).

In particular, it is noted that the at least one support arm of the at least one interim system 6, 106 is oriented so as to face towards a respective arm of the carousel station 21, for example by rotating the at least one interim system 6, 106 around the second axis of rotation 19, 119.

Then, the at least one support arm of the at least one interim system 6, 106 is coupled with an arm of the carousel station 21 to then allow the transfer of the cutting formation from the at least one interim system 6, 106 to the carousel station 21 (see for example Figure 5).

In this regard, it can be observed that with the aid of automatic systems, not shown in the attached Figures, the at least one cutting formation is moved by sliding it from the at least one support arm of the at least one interim system 6, 106 along a respective arm of the carousel system 21.

Subsequently, the second movement members are operated to move the at least one interim system 6, 106 away from the carousel system 21, decoupling them from each other, and to cause a rotation of the at least one interim system 6 around the second axis of rotation 19, 119, so as to bring the at least one support arm of the at least one interim system 6, 106 into alignment with the at least one gripping element 11, 111 of the at least one manipulator robot 5, 105. Subsequently or simultaneously with the rotation of the at least one interim system 6, 106 around the second axis of rotation 19, 119 the at least one interim system 6, 106 is moved along the guide system 8, 108 until the at least one interim system 6, 106 is moved again at the at least one manipulator robot 5, 105.

To assemble a further cutting formation along the at least one support arm of the at least one interim system 6, 106 the steps previously described are repeated.

To disassemble a cutting formation from at least one support arm of at least one interim system 6, 106 comprised in the automated system 1, 100 according to the invention, shall proceed in reverse to the disclosure above.

It is pointed out that during the coupled movement of the at least one manipulator robot 5, 105 and of the at least one interim system 6, 106 the at least one gripping element 11, 111 picks up a first circular tool 4, 104 from the cutting formation fitted along a first support arm of the interim system 6, 106 to then position it along a respective cantilevered arm among those present along the at least one equipped wall 3, 103.

In the meantime that the gripping element 11, 111 places the removed circular tool 4, 104, the at least one interim system 6, 106 positions a further circular tool 4, 104 following the one withdrawn, in a favourable condition of gripping from part of the gripping element 11, 111 itself. The movement of the individual circular tools 4, 104 along the support arms of the at least one interim system 6, 106 takes place by means of gripping members which are not the specific object of the present invention and therefore are not described or illustrated in detail.

It should be borne in mind that the method for composing or breaking down a cutting formation through an automated system 1, 100 according to the invention can be advantageously implemented by means of a computer.

The method for assembling or disassembling a cutting formation by means of an automated system 1, 100 according to the invention allows to optimize the overall time necessary for the assembling or disassembling of a cutting formation, reducing it, compared to that required by traditional solutions which do not require any tracking movement of the at least one interim system 6, 106 relative to the at least one manipulator robot 5, 105.

According to the present invention it is possible to transfer at least one circular tool 4, 104 between the at least one manipulator robot 5, 105 and the at least one interim station 6, 106 during their movement along the guide system 8, 108, thus making operational a time which, in traditional solutions, represents a dead and inactive time.

In fact, the automated system 1, 100 according to the invention, with the same circular tools 4, 104 to be handled, allows an evident time saving compared to that used by the solutions of the prior art, with reference to the arguments described above.

In the foregoing, the preferred embodiments have been described and variants of the present invention have been suggested, but it is understood that those skilled in the art will be able to make modifications and changes without thereby departing from the scope of protection, as defined by the attached claims.

## Claims

1. Automated system (1, 100) configured to assemble or disassemble cutting formations comprising:
- a storage (2, 102) provided with at least one equipped wall (3, 103), wherein said equipped wall (3, 103) is configured to support a plurality of circular tools (4, 104),
- at least one manipulator robot (5, 105), relatively movable with respect to said at least one equipped wall (3, 103) and configured to take or store one or more of said circular tools (4, 104),
- at least one interim system (6, 106) configured to interact with said at least one manipulator robot (5, 105) to sequentially receive or provide single among said circular tools (4, 104),
wherein said automated system (1, 100) comprises a guide system (8, 108) for guiding said at least one manipulator robot (5, 105) and said at least one interim system (6, 106) relative to said equipped wall (3, 103),
**characterised in that**
said at least one manipulator robot (5, 105) and said at least one interim system (6, 106) are operatively connectable to each other in a selective way to allow the reciprocal exchange of said circular tools (4, 104) during their contemporary movement along said guide system (8, 108).

2. Automated system (1, 100) according to claim 1, wherein said guide system (8, 108) comprises at least one rail (10, 130) which extends along a first direction (9, 109), wherein said first direction (9, 109) extends parallel or substantially parallel to said at least an equipped wall (3, 103).

3. Automated system (1) according to claim 2, wherein said at least one manipulator robot (5) and said at least one interim system (6) are slidably engaged one after the other along said at least one rail (10).

4. Automated system (100) according to claim 2, wherein said guide system (108) comprises a first rail (130) and a second rail (131) parallel to each other and spaced apart from each other, wherein said first rail (130) is interposed between said equipped wall (103) and said second rail (131).

5. Automated system (1) according to claim 4, wherein said at least one manipulator robot (105) is slidingly engaged along said first rail (130) and said at least one interim system (106) is slidingly engaged along said second rail (131).

6. Automated system (1) according to any one of the preceding claims, comprising at least one position control system (20) configured to move said at least one manipulator robot (5, 105) and said at least one interim system (6, 106) along said guide system (8, 108).

7. Automated system (1, 100) according to claim 6, wherein said at least one position control system (20) is configured to maintain said at least one manipulator robot (5, 105) and said at least one interim system (6, 106) at a constant distance during their movement along said system driving (8, 108).

8. Method for assembling a cutting formation by means of the automated system (1,100) according to any one of claims 1 to 7, wherein said cutting formation includes a sequence of said circular tools (4, 104), the method comprising the following steps for each specific circular tool (4, 104) of the cutting formation sequence:
- positioning said at least one manipulator robot (5, 105) at said at least one equipped wall (3, 103), moving said gripping element (11, 111) at said specific circular tool (4, 104) to be picked up;
- picking up said specific circular tool (4, 104) through said gripping element (11, 111);
- moving said at least one interim system (6, 106) along said guide system (8, 108), up to place it at said at least one manipulator robot (5, 105);
- mutually coupling said gripping element (11, 111) and at least one support arm of said at least one interim system (6, 106), to move said specific circular tool (4, 104) from said gripping element (11, 111) to said at least one interim system (6, 106), inserting it along said at least one support arm of said at least one interim system (6, 106),
- decoupling said interim system (6, 106) from said at least one manipulator robot (5, 105) moving them apart.

9. Method for assembling a cutting formation according to claim 8, wherein said step of moving said at least one interim system (6, 106) comprises ensuring that said at least one interim system (6, 106) follows said at least one manipulator robot (5, 105).

10. Method for assembling a cutting formation according to claim 9, wherein said moving step comprises ensuring that said at least one interim system (6, 106) follows said at least one manipulator robot (5, 105) at a predetermined distance.

11. Method for assembling a cutting formation according to claim 8, wherein said step of mutually coupling said gripping element (11, 111) and at least one supporting arm of said at least one interim system (6, 106) comprises rotating said at least one interim system (6, 106) around a second axis of rotation (19, 119) and/or rotate said at least one manipulator robot (5, 105) so as to align said at least one support arm of said interim system (6, 106) with said gripping element (11, 111) of said at least one manipulator robot (5, 105).

12. Method for disassembling a cutting formation by the automated system (1, 100) according to any of the claims from 1 to 7, wherein said cutting formation includes a sequence of said circular tools (4, 104) supported along at least one arm of support of said at least one interim system (6, 106), the method comprising the following steps for each specific circular tool (4, 104) of the cutting formation sequence:
- moving said at least one manipulator robot (5, 105) at a storage point for said specific circular tool (4, 104) along said at least one equipped wall (3, 103),
- moving said at least one interim system (6, 106) along said guide system (8, 108) up to place it at said at least one robot manipulator (5, 105),
- coupling said at least one support arm bearing said cutting formation with said gripping element (11, 111) of said manipulator robot (5, 105),
- picking up said specific circular tool (4, 104) from said at least one support arm through said gripping element (11, 111),
- placing said specific circular tool (4, 104) in said storage point for said specific circular tool (4, 104) along said at least one equipped wall (3, 103) by means of said gripping element (11, 111).

## Patentansprüche

1. Automatisiertes System (1, 100), das zum Montieren oder Demontieren von Schneidformationen konfiguriert ist, umfassend:
- ein Lager (2, 102), das mit mindestens einer bestückten Wand (3, 103) versehen ist, wobei die bestückte Wand (3, 103) so konfiguriert ist, dass sie eine Vielzahl von kreisförmigen Werkzeugen (4, 104) trägt,
- mindestens einen Manipulatorroboter (5, 105), der in Bezug auf die mindestens eine bestückte Wand (3, 103) relativ beweglich und so konfiguriert ist, dass er eines oder mehrere der kreisförmigen Werkzeuge (4, 104) aufnimmt oder lagert,
- mindestens ein Zwischensystem (6, 106), das so konfiguriert ist, dass es mit dem mindestens einen Manipulatorroboter (5, 105) zusammenwirkt, um sequentiell einzelne der kreisförmigen Werkzeuge (4, 104) aufzunehmen oder bereitzustellen,
wobei das automatisierte System (1, 100) ein Führungssystem (8, 108) zum Führen des mindestens einen Manipulatorroboters (5, 105) und des mindestens einen Zwischensystems (6, 106) relativ zu der ausgerüsteten Wand (3, 103) umfasst,
**dadurch gekennzeichnet, dass**
der mindestens eine Manipulatorroboter (5, 105) und das mindestens eine Zwischensystem (6, 106) auf selektive Weise miteinander verbunden werden können, um den gegenseitigen Austausch der kreisförmigen Werkzeuge (4, 104) während ihrer gleichzeitigen Bewegung entlang des Führungssystems (8, 108) zu ermöglichen.

2. Automatisiertes System (1, 100) nach Anspruch 1, wobei das Führungssystem (8, 108) mindestens eine Schiene (10, 130) umfasst, die sich entlang einer ersten Richtung (9, 109) erstreckt, wobei die erste Richtung (9, 109) parallel oder im Wesentlichen parallel zu der mindestens einen bestückten Wand (3, 103) verläuft.

3. Automatisiertes System (1) nach Anspruch 2, wobei der mindestens eine Manipulatorroboter (5) und das mindestens eine Zwischensystem (6) nacheinander entlang der mindestens einen Schiene (10) gleitend in Eingriff stehen.

4. Automatisiertes System (100) nach Anspruch 2, wobei das Führungssystem (108) eine erste Schiene (130) und eine zweite Schiene (131) umfasst, die parallel zueinander und voneinander beabstandet sind, wobei die erste Schiene (130) zwischen der ausgerüsteten Wand (103) und der zweiten Schiene (131) angeordnet ist.

5. Automatisiertes System (1) nach Anspruch 4, wobei der mindestens eine Manipulatorroboter (105) gleitend entlang der ersten Schiene (130) und das mindestens eine Zwischensystem (106) gleitend entlang der zweiten Schiene (131) in Eingriff ist.

6. Automatisiertes System (1) nach einem der vorhergehenden Ansprüche, das mindestens ein Positionssteuerungssystem (20) umfasst, das so konfiguriert ist, dass es den mindestens einen Manipulatorroboter (5, 105) und das mindestens eine Zwischensystem (6, 106) entlang des Führungssystems (8, 108) bewegt.

7. Automatisiertes System (1, 100) nach Anspruch 6, wobei das mindestens eine Positionssteuersystem (20) so konfiguriert ist, dass es den mindestens einen Manipulatorroboter (5, 105) und das mindestens eine Zwischensystem (6, 106) während ihrer Bewegung entlang des Systemantriebs (8, 108) in einem konstanten Abstand hält.

8. Verfahren zum Zusammenbau einer Schneidformation mittels des automatisierten Systems (1, 100) nach einem der Ansprüche 1 bis 7, wobei die Schneidformation eine Folge der kreisförmigen Werkzeuge (4, 104) umfasst, wobei das Verfahren die folgenden Schritte für jedes spezifische kreisförmige Werkzeug (4, 104) der Schneidformationsfolge umfasst:
- Positionieren des mindestens einen Manipulatorroboters (5, 105) an der mindestens einen bestückten Wand (3, 103), Bewegen des Greifelements (11, 111) an dem aufzunehmenden spezifischen kreisförmigen Werkzeug (4, 104);
- Aufnehmen des spezifischen kreisförmigen Werkzeugs (4, 104) durch das Greifelement (11, 111);
- Bewegen des mindestens einen Zwischensystems (6, 106) entlang des Führungssystems (8, 108), um es an dem mindestens einen Manipulatorroboter (5, 105) zu platzieren;
- gegenseitiges Koppeln des Greifelements (11, 111) und mindestens eines Stützarms des mindestens einen Zwischensystems (6, 106), um das spezifische kreisförmige Werkzeug (4, 104) von dem Greifelement (11, 111) zu dem mindestens einen Zwischensystem (6, 106) zu bewegen, indem es entlang des mindestens einen Stützarms des mindestens einen Zwischensystems (6, 106) eingeführt wird,
- Entkoppeln des Zwischensystems (6, 106) von dem mindestens einen Manipulatorroboter (5, 105), der sie auseinander bewegt.

9. Verfahren zum Zusammenbau einer Schneidformation nach Anspruch 8, wobei der Schritt des Bewegens des mindestens einen Zwischensystems (6, 106) darin besteht, sicherzustellen, dass das mindestens eine Zwischensystem (6, 106) dem mindestens einen Manipulatorroboter (5, 105) folgt.

10. Verfahren zum Zusammenbau einer Schneidformation nach Anspruch 9, wobei der Schritt des Bewegens darin besteht, sicherzustellen, dass das mindestens eine Zwischensystem (6, 106) dem mindestens einen Manipulatorroboter (5, 105) in einem vorbestimmten Abstand folgt.

11. Verfahren zum Zusammenbau einer Schneidformation nach Anspruch 8, wobei der Schritt des gegenseitigen Koppelns des Greifelements (11, 111) und mindestens eines Stützarms des mindestens einen Zwischensystems (6, 106) das Drehen des mindestens einen Zwischensystems (6, 106) um eine zweite Drehachse (19, 119) und/oder das Drehen des mindestens einen Manipulatorroboters (5, 105) umfasst, um den mindestens einen Stützarm des Zwischensystems (6, 106) mit dem Greifelement (11, 111) des mindestens einen Manipulatorroboters (5, 105) auszurichten.

12. Verfahren zum Zerlegen einer Schneidformation durch das automatisierte System (1, 100) nach einem der Ansprüche 1 bis 7, wobei die Schneidformation eine Sequenz der kreisförmigen Werkzeuge (4, 104) umfasst, die entlang mindestens eines Stützarms des mindestens einen Zwischensystems (6, 106) getragen werden, wobei das Verfahren die folgenden Schritte für jedes spezifische kreisförmige Werkzeug (4, 104) der Schneidformationssequenz umfasst:
- Bewegen des mindestens einen Manipulatorroboters (5, 105) an einem Speicherpunkt für das spezifische kreisförmige Werkzeug (4, 104) entlang der mindestens einen bestückten Wand (3, 103),
- Bewegen des mindestens einen Zwischensystems (6, 106) entlang des Führungssystems (8, 108), um es an dem mindestens einen Robotermanipulator (5, 105) zu platzieren,
- Koppeln des mindestens einen Stützarms, der die Schneidformation trägt, mit dem Greifelement (11, 111) des Manipulatorroboters (5, 105),
- Aufnehmen des spezifischen kreisförmigen Werkzeugs (4, 104) von dem mindestens einen Tragarm durch das Greifelement (11, 111),
- Ablegen des spezifischen kreisförmigen Werkzeugs (4, 104) in dem Speicherpunkt für das spezifische kreisförmige Werkzeug (4, 104) entlang der mindestens einen ausgerüsteten Wand (3, 103) mittels des Greifelements (11, 111).

## Revendications

1. Système automatisé (1, 100) configuré pour assembler ou désassembler des formations de coupe comprenant :
- un dispositif de stockage (2, 102) pourvu d'au moins une paroi équipée (3, 103), dans lequel ladite paroi équipée (3, 103) est configurée pour supporter une pluralité d'outils circulaires (4, 104),
- au moins un robot manipulateur (5, 105), relativement mobile par rapport à ladite au moins une paroi équipée (3, 103) et configuré pour prendre ou stocker un ou plusieurs desdits outils circulaires (4, 104),
- au moins un système intermédiaire (6, 106) configuré pour interagir avec ledit au moins un robot manipulateur (5, 105) pour recevoir ou fournir séquentiellement un seul outil parmi lesdits outils circulaires (4, 104),
dans lequel ledit système automatisé (1, 100) comprend un système de guidage (8, 108) pour guider ledit au moins un robot manipulateur (5, 105) et ledit au moins un système intermédiaire (6, 106) par rapport à ladite paroi équipée (3, 103),
**caractérisé en ce que** ce
ledit au moins un robot manipulateur (5, 105) et ledit au moins un système intermédiaire (6, 106) peuvent être fonctionnellement reliés l'un à l'autre d'une manière sélective pour permettre l'échange réciproque desdits outils circulaires (4, 104) pendant leur déplacement contemporain le long dudit système de guidage (8, 108).

2. Système automatisé (1, 100) selon la revendication 1, dans lequel ledit système de guidage (8, 108) comprend au moins un rail (10, 130) qui s'étend le long d'une première direction (9, 109), dans lequel ladite première direction (9, 109) s'étend parallèlement ou sensiblement parallèlement à ladite au moins une paroi équipée (3, 103).

3. Système automatisé (1) selon la revendication 2, dans lequel ledit au moins un robot manipulateur (5) et ledit au moins un système intermédiaire (6) sont engagés en coulissement l'un après l'autre le long dudit au moins un rail (10).

4. Système automatisé (100) selon la revendication 2, dans lequel ledit système de guidage (108) comprend un premier rail (130) et un deuxième rail (131) parallèles entre eux et espacés l'un de l'autre, dans lequel ledit premier rail (130) est interposé entre ladite paroi équipée (103) et ledit deuxième rail (131).

5. Système automatisé (1) selon la revendication 4, dans lequel ledit au moins un robot manipulateur (105) est engagé en coulissement le long dudit premier rail (130) et ledit au moins un système intermédiaire (106) est engagé en coulissement le long dudit deuxième rail (131).

6. Système automatisé (1) selon l'une quelconque des revendications précédentes, comprenant au moins un système de commande de position (20) configuré pour déplacer ledit au moins un robot manipulateur (5, 105) et ledit au moins un système intermédiaire (6, 106) le long dudit système de guidage (8, 108).

7. Système automatisé (1, 100) selon la revendication 6, dans lequel ledit au moins un système de commande de position (20) est configuré pour maintenir ledit au moins un robot manipulateur (5, 105) et ledit au moins un système intermédiaire (6, 106) à distance constante lors de leur déplacement le long dudit système de guidage (8, 108).

8. Procédé d'assemblage d'une formation de coupe au moyen du système automatisé (1, 100) selon l'une quelconque des revendications 1 à 7, dans lequel ladite formation de coupe comporte une séquence desdits outils circulaires (4, 104), le procédé comprenant les étapes suivantes pour chaque outil circulaire spécifique (4, 104) de la séquence de formation de coupe :
- le positionnement dudit au moins un robot manipulateur (5, 105) au niveau de ladite au moins une paroi équipée (3, 103), déplaçant ledit élément de préhension (11, 111) au niveau dudit outil circulaire spécifique (4, 104) à saisir ;
- la saisie dudit outil circulaire spécifique (4, 104) à travers ledit élément de préhension (11, 111) ;
- le déplacement dudit au moins un système intermédiaire (6, 106) le long dudit système de guidage (8, 108), jusqu'à le placer au niveau dudit au moins un robot manipulateur (5, 105) ;
- l'accouplement mutuel dudit élément de préhension (11, 111) et d'au moins un bras de support dudit au moins un système intermédiaire (6, 106), pour déplacer ledit outil circulaire spécifique (4, 104) dudit élément de préhension (11, 111) vers ledit au moins un système intermédiaire (6, 106), l'insérant le long dudit au moins un bras de support dudit au moins un système intermédiaire (6, 106),
- le désaccouplement dudit système intermédiaire (6, 106) dudit au moins un robot manipulateur (5, 105) en les écartant.

9. Procédé d'assemblage d'une formation de coupe selon la revendication 8, dans lequel ladite étape de déplacement dudit au moins un système intermédiaire (6, 106) comprend le fait de s'assurer que ledit au moins un système intermédiaire (6, 106) suit ledit au moins un robot manipulateur (5, 105).

10. Procédé d'assemblage d'une formation de coupe selon la revendication 9, dans lequel ladite étape de déplacement comprend le fait de s'assurer que ledit au moins un système intermédiaire (6, 106) suit ledit au moins un robot manipulateur (5, 105) à une distance prédéterminée.

11. Procédé d'assemblage d'une formation de coupe selon la revendication 8, dans lequel ladite étape de d'accouplement mutuel dudit élément de préhension (11, 111) et d'au moins un bras de support dudit au moins un système intermédiaire (6, 106) comprend la rotation dudit au moins un système intermédiaire (6, 106) autour d'un deuxième axe de rotation (19, 119) et/ou la rotation dudit au moins un robot manipulateur (5, 105) de manière à aligner ledit au moins un bras de support dudit système intermédiaire (6, 106) avec ledit élément de préhension (11, 111) dudit au moins un robot manipulateur (5, 105).

12. Procédé de désassemblage d'une formation de coupe par le système automatisé (1, 100) selon l'une des revendications 1 à 7, dans lequel ladite formation de coupe comporte une séquence desdits outils circulaires (4, 104) supportés le long d'au moins un bras de support dudit au moins un système intermédiaire (6, 106), le procédé comprenant les étapes suivantes pour chaque outil circulaire spécifique (4, 104) de la séquence de formation de coupe :
- le déplacement dudit au moins un robot manipulateur (5, 105) en un point de stockage pour ledit outil circulaire spécifique (4, 104) le long de ladite au moins une paroi équipée (3, 103),
- le déplacement dudit au moins un système intermédiaire (6, 106) le long dudit système de guidage (8, 108) jusqu'à le placer au niveau dudit au moins un robot manipulateur (5, 105),
- l'accouplement dudit au moins un bras de support portant ladite formation de coupe avec ledit élément de préhension (11, 111) dudit robot manipulateur (5, 105),
- la saisie dudit outil circulaire spécifique (4, 104) à partir dudit au moins un bras de support à travers ledit élément de préhension (11, 111),
- le placement dudit outil circulaire spécifique (4, 104) dans ledit point de stockage pour ledit outil circulaire spécifique (4, 104) le long de ladite au moins une paroi équipée (3, 103) au moyen dudit élément de préhension (11, 111).
